# EUROPEAN PATENT APPLICATION

(11) **EP 3 967 153 A1**
(43) Date of publication of application: **16.03.2022**
(21) Application number: 20199054.6
(22) Date of filing: 29.09.2020
(51) Int. Cl.: A23L 27/14, A23L 27/40

(54) **A SOLAR SALT COMPOSITION WITH IMPROVED FLAVOR AND A METHOD FOR MANUFACTURING THE SAME**

(30) Priority: 09.09.2020 KR 20200115471
(71) Applicant: Haeyeareum Co., Ltd., Gyeonggi-do 10131 (KR)
(72) Inventor: Han, Kyo Mo, 14574 Gyeonggi-do (KR)
(74) Representative: Hauck Patentanwaltspartnerschaft mbB

(57) **Abstract**

The present invention relates to a solar salt composition, and more particularly, to a solar salt composition with improved flavor and a method for manufacturing the same. According to the present invention, it is possible to provide a solar salt composition with improved flavor and a method for manufacturing the same, which not only can maximize the palatability of food by improving the flavor, but also has low salinity and is rich in minerals, thereby being beneficial to health.

## Description

### [RELATED APPLICATIONS]

This application claims priority to Korean Patent Application No. 10-2020-0115471, filed on September 09, 2020 in the Korean Intellectual Property Office, the entire disclosure of which is incorporated herein by reference.

### [BACKGROUND OF THE INVENTION]

### 1. Field of the Invention

The present invention relates to a solar salt composition, and more particularly, to a solar salt composition with improved flavor and a method for manufacturing the same.

### 2. Description of the Related Art

Salt is largely classified into solar salt and refined salt. Solar salt is an unprocessed coarse, translucent hexagonal crystal made by pulling seawater into a salt field and evaporating harmful components along with moisture by wind and sunlight. In contrast, refined salt is a crystal of sodium chloride (NaCl) obtained by electrolyzing seawater to remove impurities and heavy metals with an ion resin film.

Solar salt is produced all over the world, in the Indian Ocean, the Mediterranean coast, the United States, and Australia. However, among them, the quality of solar salt produced in Korea is known to be excellent in the worldwide market. In Korea, solar salt is produced a lot in the west and south coasts, where the water depth is not deep and the tide and tidal difference is large, and Sinan-gun, Jeollanam-do, accounts for 65% of Korea's solar salt production and more than half of the salt field area, and the quality of the solar salt is excellent.

Since solar salt contains a lot of minerals such as calcium, magnesium, zinc, potassium, and iron as well as moisture, it is good for pickling vegetables and fish, so it is mainly used for making kimchi, soy sauce, and soybean paste. While it contains a lot of minerals that are good for the body, it also contains some toxic substances, which must be removed before intake. When kimchi, soy sauce, or soybean paste is made with solar salt, the toxic substances disappear as they ferment. In addition, since solar salt is highly hygroscopic and hardens well, it must be kept closed.

Meanwhile, solar salt has a peculiar bitter taste, so there is a problem in eating it as it is or applying it to food, etc. For these reasons, solar salt is processed to produce table salt without impurities and bitter taste. However, in this process, various beneficial ingredients such as natural minerals contained in solar salt are lost together.

Therefore, the inventor of the present invention attempted to develop a solar salt composition that can be eaten without a sense of rejection due to improved flavor without loss of natural minerals.

Korean Patent Publication Laid-Open No. 10-2013-0003452 (published on January 09, 2013) discloses a method for manufacturing low-salinity salt. More specifically, it relates to a method for manufacturing low-salinity salt including a step of storing salt having a NaCl content of 50 to 81% by weight based on 100% by weight of the total salt composition in a temperature condition of 15°C to 35°C and a humidity condition of 90% to 99.99% of relative humidity. Moreover, the invention related to the low-salinity salt manufactured by the method for manufacturing law-salinity salt.

### [SUMMARY OF THE INVENTION]

In consideration of the above-mentioned circumstances, it is an object of the present invention to provide a solar salt composition with improved flavor as well as a method for manufacturing the solar salt composition with improved flavor.

In order to achieve the above object, the present invention provides a solar salt composition with improved flavor.

In addition, it provides a method for manufacturing the same.

The solar salt composition may include 80 to 99% by weight of solar salt and 1 to 20% by weight of a flavor enhancing ingredient.

The solar salt is not limited thereto, but preferably may be solar salt ripened for 3 to 5 years, more preferably solar salt ripened for 5 years.

If the ripening period of solar salt is less than the above period, the magnesium content is so high that the bitter taste is strong, and the moisture content is so high that it is difficult to store solar salt. If the ripening period of solar salt exceeds the above period, the mineral content of solar salt escapes and the mineral content decreases. Ripening is done naturally in a cool place with good ventilation.

The salinity of the solar salt may be 70% or more, preferably 75 to 80% or less.

The moisture content of the solar salt is 1 to 20% or less, preferably 1 to 10% or less, and more preferably 1 to 5% or less. If the moisture content is higher than the above range, the mineral balance may not be suitable and the flavor may be impaired.

The flavor enhancing ingredient may be included in the form of concentrated extract, juice, extract, powder (including solid powder) depending on raw materials.

Examples of flavor enhancing ingredient that may be included in the form of the concentrated extract may include sea cucumber, oyster, black garlic, red ginseng, ginseng, flower mushroom, pomegranate, apple, or fermented liquid thereof, but are not limited thereto.

When flavor enhancing ingredient is included in the form of the concentrated extract, the concentrated extract may be included in an amount of 1 to 10% by weight, preferably 2 to 9% by weight, and more preferably 3 to 8% by weight.

In addition, the concentrated extract may be included in 60 to 65 brix.

If the content and concentration of the concentrated extract are out of the way, too much salt is dissolved, resulting in a high loss rate.

Examples of flavor enhancing ingredient that may be included in the form of juice or extract are not limited, but may preferably be fruits, and the fruits may include raspberry, strawberries, tangerines, blueberries, schisandra, lemons, melon, etc., but are not limited thereto.

When flavor enhancing ingredient is included in the form of juice or extract, the juice or extract may be included in 1 to 20% by weight, preferably 5 to 20% by. The juice or extract may be used as it is, or as fermented.

As described above, the reason why fruits are included in the form of juice or extract is that most of the fruits are rich in sugar, so if they are made in a form of concentrated extract, the sugar is too rich and the viscosity increases, which is not suitable for the manufacturing process.

Examples of flavor enhancing ingredient that may be included in the form of powder or solid powder include truffle, octopus, snow crab, red crab, salicomia, kelp, shrimp, anchovy, spinach, turmeric, Hizikia fusiforme, shiitake mushroom, moringa, herbs, loquat, Pepper (eg, cheongyang pepper, pepper Roccino, etc.), but are not limited thereto. The herb may include basil, rosemary, peppermint, applemint, etc., but is not limited thereto.

When flavor enhancing ingredient is included in the form of powder or solid powder, the powder or solid powder may be included in 1 to 10% by weight, preferably 2 to 8% by weight.

The reason for including the flavor enhancing ingredient in the form of powder or solid powder as described above is that it is difficult to manufacture concentrated extract due to the nature of the raw material and is not suitable for the manufacturing process.

The solar salt composition may be ripened at 1 to 15°C, preferably 5 to 10°C for 2 to 4 days, preferably 3 days. If the ripening condition is out of the above, the flavor is deteriorated and the color saturation is deteriorated due to over-ripening.

A method for manufacturing the solar salt composition includes the following steps;
(a) adding and blending flavor enhancing ingredient to dried solar salt;
(b) ripening the blended solar salt composition through the step (a).

In the step (a), the solar salt and the flavor enhancing ingredient are blended within 1 hour, preferably within 20 to 40 minutes, more preferably within 30 minutes. If the blending time is less than the above, the solar salt and the flavor enhancing ingredient may not be evenly blended, and if the blending time exceeds the above time, the flavor may be rather impaired.

In the step (b), ripening may be performed at 1 to 15°C, preferably 5 to 10°C for 2 to 4 days, preferably 3 days. If the ripening conditions are out of the above, the raw material of the flavor enhancing ingredient does not well permeate the solar salt, and the solar salt is excessively dissolved, making it difficult to manufacture a solar salt composition with improved flavor.

After the ripening step(b), the method for manufacturing the solar salt composition with improved flavor may further include a drying step(c), a crushing and packaging step(d).

A solar salt composition according to the present invention can provide a solar salt composition with improved flavor and a method for manufacturing the same, which not only can maximize the palatability of food by improving the flavor, but also has low salinity and is rich in minerals, thereby being beneficial to health.

### [BRIEF DESCRIPTION OF DRAWINGS]

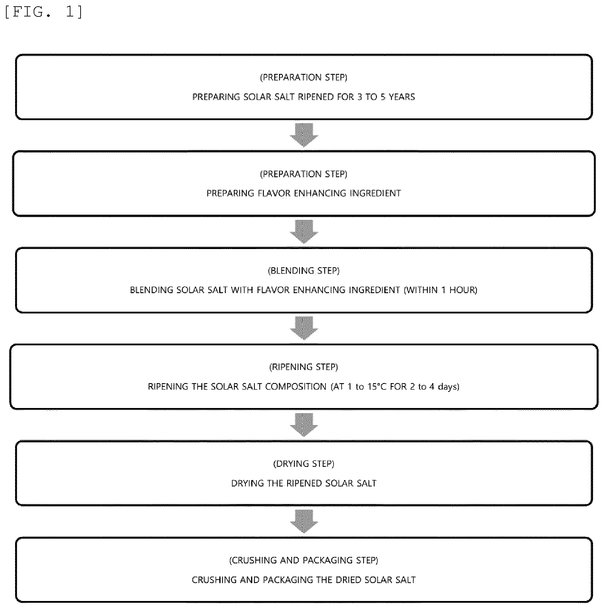

FIG. 1 is an overall process diagram of a method for manufacturing a solar salt composition with improved flavor according to an embodiment of the present invention.

### [DETAILED DESCRIPTION OF THE INVENTION]

Hereinafter, the present invention will be described in detail by examples and experimental examples.

However, the following examples and experimental examples are merely illustrative of the present invention, and the contents of the present invention are not limited to the following examples and experimental examples.

### <Example> Manufacturing a solar salt composition with improved flavor according to the present invention

Solar salt was prepared to be ripened for 5 years and to have the salinity of 75% and a moisture content of 5%, and flavor enhancing ingredient was blended with the solar salt for 30 minutes. By ripening the composition at 5-10°C for 3 days, a solar salt composition was manufactured. Flavor enhancing ingredient including sea cucumber, oyster, black garlic, red ginseng, ginseng, flower mushroom, pomegranate, raspberry, strawberry, tangerine, blueberry, schisandra, melon, lemon, truffle, octopus, snow crab, red crab, salicomia, kelp, shrimp, anchovy, spinach, turmeric, Hizikia fusiforme, shiitake mushroom, herb, moringa, loquat, and red pepper were used, and the flavor enhancing ingredients was prepared in a form of concentrated extract, powder (including solid powder), and juice depending on raw materials. The blending ratio of the solar salt composition and the flavor enhancing ingredient are shown in Tables 1 to 3 below.

**[Table 1] Blending ratio of a solar salt composition using flavor enhancing ingredient in a form of concentrated extract**

| **No.** | **Flavor enhancing ingredient** | **Content of Solar salt (%)** | **Content of concentrated extract (%)** |
|---|---|---|---|
| Example 1 | Sea cucumber | 93 | 7 |
| Example 2 | Oyster | 95 | 5 |
| Example 3 | Black garlic | 94 | 6 |
| Example 4 | Red ginseng | 92 | 8 |
| Example 5 | Ginseng or flower mushroom | 92 | 8 |
| Example 6 | Pomegranate | 95 | 5 |
| Example 7 | Fermentation broth of an apple | 95 | 5 |

The concentrated extract was concentrated to a brix of 60 to 65 and ripened at a low temperature of 5 to 10°C for 3 days.

**[Table 2] Blending ratio of a solar salt composition using flavor enhancing ingredient in a form of solid powder**

| **No.** | **Flavor enhancing ingredient** | **Content of Solar salt (%)** | **Content of solid powder(%)** |
|---|---|---|---|
| Example 8 | Truffle | 98 | 2 |
| Example 9 | Octopus, Snow crab, or Red crab | 93 | 7 |
| Example 10 | Salicomia | 96 | 4 |
| Example 11 | Spinach | 96 | 4 |
| Example 12 | Turmeric | 96 | 4 |
| Example 13 | Hizikia fusiforme | 96 | 4 |
| Example 14 | shiitake mushroom | 95 | 5 |
| Example 15 | (1:1:1:1) mixture of Mushroom, kelp, shrimp, and anchovy | 94 | 6 |
| Example 16 | Herb | 92 | 8 |
| Example 17 | Pepper, Moringa, NÈFLE DU JAPON | 95 | 5 |

The solid powder was added by kneading the powder in water, put in a stirrer, blended for about 30 minutes, and then ripened at a low temperature of 5 to 10°C for 3 days.

**[Table 3] Blending ratio of a solar salt composition using flavor enhancing ingredient in a form of juice**

| **No.** | **Flavor enhancing ingredient** | **Content of Solar salt (%)** | **Content of juice (%)** |
|---|---|---|---|
| Example 18 | Raspberry | 92 | 8 |
| Example 19 | Strawberry, melon | 82 | 18 |
| Example 20 | Tangerine | 82 | 18 |
| Example 21 | Blueberry | 92 | 8 |
| Example 22 | Schisandra | 85 | 15 |
| Example 23 | Lemon | 92 | 8 |

Likewise, juice was put in a stirrer and blended for 30 minutes so that it permeated solar salt well, and it was ripened at a low temperature of 5 to 10°C for 3 days.

### <Experimental Example> Sensory Evaluation

Sensory evaluation of the solar salt composition prepared in the above example according to the present invention was performed. For the evaluation, 10 panelists of 5 males and females each were selected, and saltiness, bitterness, flavor, and hardness were comprehensively evaluated in 10 point scaling manner to obtain an average value. Solar salt ripened for 1 year was prepared for a control group. In Comparative Examples, flavor enhancing ingredient was added in the same manner as in each example, but was prepared without performing the ripening step afterwards. The evaluation results are shown in Table 4.

**[Table 4]**

| **No.** | Saltiness | Bitterness | Flavor | Hardness |
|---|---|---|---|---|
| Control group | 9.5 | 9 | 1 | 9 |
| Example 1 | 6.5 | 3 | 8.5 | 4.5 |
| Example 2 | 6 | 2 | 9 | 4.5 |
| Example 3 | 6.5 | 2.5 | 9 | 4 |
| Example 4 | 6.5 | 2.5 | 8.5 | 5 |
| Example 5 | 5.5 | 2 | 8.5 | 5 |
| Example 6 | 6 | 2 | 9 | 4 |
| Example 7 | 6.5 | 2.5 | 9 | 4 |
| Example 8 | 6 | 1.5 | 9.5 | 4.5 |
| Example 9 | 6 | 2 | 9 | 4.5 |
| Example 10 | 6.5 | 2 | 9 | 4.5 |
| Example 11 | 5.5 | 2 | 9 | 5 |
| Example 12 | 6 | 2.5 | 9 | 5 |
| Example 13 | 6.5 | 2 | 9 | 4 |
| Example 14 | 5.5 | 2 | 9.5 | 4 |
| Example 15 | 6 | 2.5 | 9.5 | 5.5 |
| Example 16 | 6 | 3 | 9 | 5 |
| Example 17 | 6 | 2.5 | 9 | 5 |
| Example 18 | 6.5 | 2.5 | 9 | 4.5 |
| Example 19 | 6 | 2.5 | 9.5 | 4.5 |
| Example 20 | 5.5 | 2 | 9.5 | 5 |
| Example 21 | 6 | 2 | 9.5 | 5 |
| Example 22 | 6 | 2.5 | 9 | 4 |
| Example 23 | 6 | 2.5 | 9.5 | 4 |
| Comparative Example 1 | 6 | 3.5 | 5 | 7 |
| Comparative Example 2 | 6.5 | 4 | 5.5 | 6.5 |
| Comparative Example 3 | 6 | 4.5 | 6.5 | 6 |
| Comparative Example 4 | 6 | 4 | 6 | 6 |
| Comparative Example 5 | 5.5 | 4 | 6.5 | 6.5 |
| Comparative Example 6 | 6 | 3.5 | 6 | 7 |
| Comparative Example 7 | 6 | 4 | 6 | 7 |
| Comparative Example 8 | 6 | 4 | 6.5 | 7.5 |
| Comparative Example 9 | 6.5 | 4.5 | 6 | 6.5 |
| Comparative Example 10 | 6.5 | 4 | 6 | 6.5 |
| Comparative Example 11 | 6.5 | 4 | 5.5 | 7 |
| Comparative Example 12 | 6.5 | 4.5 | 6 | 7 |
| Comparative Example 13 | 7 | 4 | 6 | 6.5 |
| Comparative Example 14 | 6.5 | 4 | 6.5 | 6.5 |
| Comparative Example 15 | 6.5 | 4.5 | 5 | 7 |
| Comparative Example 16 | 6 | 4.5 | 5 | 7 |
| Comparative Example 17 | 6 | 5 | 5 | 6.5 |
| Comparative Example 18 | 6 | 5 | 5.5 | 7 |
| Comparative Example 19 | 6.5 | 4.5 | 5.5 | 7.5 |
| Comparative Example 20 | 7 | 5 | 5.5 | 7.5 |
| Comparative Example 21 | 6.5 | 5 | 6 | 7 |
| Comparative Example 22 | 7 | 5.5 | 6 | 7 |
| Comparative Example 23 | 6.5 | 5.5 | 5.5 | 6.5 |

As a result of the evaluation, in the control group, both salty and bitter tastes were strong, and the texture was bad because of the low flavor and the high hardness. Examples 1 to 23 according to the present invention were evaluated as having improved flavor while having low saltiness and bitterness, and excellent texture because they were not too hard.

On the other hand, in Comparative Examples 1 to 23, saltiness was evaluated at a level similar to that of the examples according to the present invention, but bitterness and hardness were evaluated higher than that of the examples, and flavor was evaluated relatively low. This means that the flavor is not improved because the ripening period according to the present invention has not been carried out.

## Claims

1. A solar salt composition with improved flavor, comprising 80 to 99% by weight of solar salt and 1 to 20% by weight of a flavor enhancing ingredient.

2. The solar salt composition with improved flavor according to claim 1, wherein the solar salt has a moisture content of 1 to 5% or less.

3. The solar salt composition with improved flavor according to claim 1, wherein the solar salt is ripened for 3 to 5 years.

4. The solar salt composition with improved flavor according to claim 1, wherein the solar salt has the salinity of 75 to 80% or less.

5. The solar salt composition with improved flavor according to claim 1, wherein the solar salt composition is ripened at 5 to 10°C for 3 days.

6. The solar salt composition with improved flavor according to claim 1, wherein the flavor enhancing ingredient is at least one selected from the group consisting of sea cucumber, oyster, black garlic, red ginseng, ginseng, flower mushroom, pomegranate, apple, raspberry, strawberry, tangerine, blueberry, schisandra, melon, lemon, truffle, octopus, snow crab, red crab, salicomia, mushroom, kelp, shrimp, anchovy, spinach, turmeric, Hizikia fusiforme, shiitake mushroom, herb, moringa, loquat, and red pepper.

7. The solar salt composition with improved flavor according to claim 1, wherein the flavor enhancing ingredient is included in any form of concentrated extract, juice, extract, powder, or solid powder.

8. A method for manufacturing a solar salt composition with improved flavor according to any one of claims 1 to 7, comprising;
(a) a step of adding a flavor enhancing ingredient to the dried solar salt and blending for 20 to 40 minutes;
(b) a step of ripening the blended solar salt through the step (a) at 5 to 10°C for 2 to 4 days.
